# EUROPEAN PATENT APPLICATION

(11) **EP 4 535 300 A1**
(43) Date of publication of application: **09.04.2025**
(21) Application number: 23741582.3
(22) Date of filing: 30.05.2023
(51) Int. Cl.: G06V 20/20, G06V 20/60, G06V 10/10

(54) **LOCAL IMAGE PROCESSING METHOD AND SYSTEM FOR OBJECT IDENTIFICATION AND CLASSIFICATION AND GENERATION OF KPIS**

(30) Priority: 31.05.2022 US 202263365522 P
(71) Applicant: MC1 TECHNOLOGIES INC., North Miami, Florida 33138 (US); MC1 Tecnologia Ltda, 01419-001 São Paulo (BR)
(72) Inventor: DE OLIVEIRA CHAGAS, Júlio Fábio, 01537-000 São Paulo - SP (BR)
(74) Representative: Kraus & Lederer PartGmbB
(86) International application number: PCT/BR2023/050167
(87) International publication number: WO 2023/230687

(57) **Abstract**

The present invention relates to a local image processing method and system for object identification, classification and generation of at least one KPI based on: capturing an image using a mobile device (20), wherein the image contains at least one specific object type, assigning a specialized model related to the image, wherein the specialized model is related to the specific object type in the image, recognizing at least one object in the image based on the specialized model, informing the user that the said object has been recognized, and calculating at least one KPI related to said object.

## Description

The present invention relates to a local image processing method and system for object identification, classification and generation of at least one KPI. More specifically, the present invention is related to a method and system able to identify objects in a captured image and locally generate at least one KPI, outside of a cloud environment.

### Description of the State of the Art:

Companies produce a broad range of goods that are displayed for sale to consumers in general, for example, at several points of sale. There is thus a need for such companies to monitor whether the display and sale of such products is occurring as desired, such as an audit procedure.

For example, it is undesirable for a company's products to be displayed in the refrigerator of a competing brand. Moreover, it is desired that the display and sale of goods take place appropriately, for example, in quantities agreed previously between the manufacturer and the point of sale.

Consequently, there is a need for the state of the art to disclose a means for such companies to conduct field audits of displays of their goods, based on image capturing.

Methodologies known in the state of the art perform all image processing in a cloud environment, thereby requiring users of such methodology to have an active internet connection that is fast and of good quality, so that processing occurs within an acceptable time frame.

Cloud processing and dependence on an internet connection do present disadvantages for users of such methodology. For example, costly infrastructure is required, leading to financial inefficiency. Furthermore, due to the need for in-cloud operations and internet connectivity, expensive mobile devices with high processing capacity must be acquired, increasing these costs.

Obviously, dependence on the internet is detrimental *per se* because if the user is not online, the methodology will simply not work.

Furthermore, cloud processing leads to long waiting times for end users, which also tends to affect their productivity, as such users must visit several points of sale during the day.

Moreover, delays caused by cloud-based internet processing lead to unnecessary delays, including other tasks that may be performed by users in their workplaces, and may even result in their abandonment of the ongoing image recognition process, due to significant delays in its completion.

Another hurdle in state-of-the-art solutions is that they work with global models for all classes of items under consideration, which makes the generated models excessively large and heavy. This renders them impractical for being sent to mobile devices for subsequent operation through means that do not rely on internet and/or cloud connections.

Yet another hurdle in state-of-the-art solutions is that when it comes to capturing images at specific points of sale, such as stores and [super]markets, for instance, the environment to be captured in the image is often huge, with long shelves separated by narrow aisles, making it hard to capture the image with precision and good quality detail.

More specifically, it is not possible, for example, to capture a picture of a long shelf in a single image, even in landscape mode, where small products such as beverage bottles may be identified along with their respective prices, labels, and other information.

In these cases, it is necessary to capture multiple images, and the state of the art proposes sending them to the cloud where these multiple images are processed. In other words, the processing occurs in the cloud and involves multiple images.

For object identification, the state of the art commonly proposes performing this step while simultaneously identifying all the objects in an image. This makes the processing much slower and heavier, as a large number of objects may be in a single image.

Consequently, there is a physical processing limitation based on the capacity of the device performing this step, as it is not possible to classify a large number of objects on a device with limited processing capacity, because its memory and processing power cannot handle this implementation.

Moreover, a widely known step called "annotation" or "annotations" is commonly performed online. This process refers to certain object identification corrections, where identification errors or object confusion are reported by the platform, usually handled in the cloud by a specialized staff.

Furthermore, if a gap is detected on the shelf, it is typically possible to acquire the missing product online, thus creating dependence on the network and connection quality, while also causing delays in completing a potential transaction.

Another type of solution that is frequently presented as a separate tool from the on-shelf image and product identification tools is the price tag identification. It is stressed that these tools are usually presented individually and separately from product identification tools per se, requiring an additional step of cross-referencing product data and price data for subsequently linking this information to other data.

With the solutions known at the state of the art, it is possible to create a "general" database feed that is excessively costly and time-consuming, as all processing occurs in the cloud. Consequently, the large number of images to be processed for feeding into this database overwhelms this platform, when stored in the cloud.

It is thus neither advantageous nor productive to perform this image data processing in the cloud for subsequent feeding into a database, for obtaining certain KPIs and conducting audits, for example, due to the extremely high volumes of data to be processed in the cloud and/or network.

Consequently, there are no solutions in the state of the art using files that are lightweight and compact enough to allow platform access without an internet and/or cloud connection for performing specific object recognition at a specific commercial location, based on at least one image captured by a device.

Although the state of the art may disclose methodologies that can operate offline in some situations, such solutions have limitations, such as the need to use high-end devices or a limited number of products to be identified.

### Objectives of the Invention

An objective of the presentthe present invention is to provide a method of local image processing for the identification and classification of objects and the generation of KPIs locally, outside of a cloud environment.

An objective of the present the present invention is to provide a system of local image processing for the identification and classification of objects and the generation of KPIs locally, outside of a cloud environment.

The present invention also is intended to provide a method and system that may be operated with no need for an internet connection.

### Brief Description of the Invention

The objectives of the present invention are achieved by means of a local image processing method and system for identification and classification of objects and the generation of KPIs. The method is performed using a mobile device and comprises at least the following steps: defining at least one operating segment, through a network connection on the mobile device, receiving at least one database related to the operating segment, wherein the database comprises a set of specialized models provided from a remote set of specialized models. The method also comprises capturing at least one image using the mobile device, processing the image locally on the mobile device, and detecting at least one object pattern in the captured image.

If at least one object pattern is detected, the method considers the respective specialized model for the detected object pattern, wherein the specialized model comprises at least one recognition pattern. The method further comprises evaluating the object pattern in the image with the respective recognition pattern in the specialized model. Based on the evaluation between the object pattern in the image and the respective recognition pattern in the specialized model, the object is classified, and the user is informed of the classification. At least one KPI is generated on the mobile device, based on the object classification.

### Brief Description of the Drawings

The present invention will be described in greater detail based on an example of an embodiment presented in the drawings. The figures show:
Figure 1 - a block diagram representation of a methodology known in the state of the art;
Figure 2 - a simplified block diagram representation of the image recognition methodology according to the teachings of the present invention;
Figure 3 - a block diagram representation of one of the steps comprising the methodology described accordingly to the present invention;
Figure 4 - an additional representation of one of the steps of the methodology of the present invention;
Figure 5 - a representation of one of the steps in the methodology of the presentthe present invention, indicating the generation of an image map;
Figure 6 - a representation of one of the steps in the methodology of the present the present invention, indicating the generation of an image map;
Figure 7 - a block diagram representation of one of the steps of the methodology of the presentthe present invention;
Figure 8 - a block diagram representation of one of the steps of the methodology of the present the present invention, indicating receiving specialized models for a plurality of users;
Figure 9 - a representation of the step of capturing an image at a point of sale using a mobile device;
Figure 10 - a representation of the step of detecting a plurality of objects in an image;
Figure 11 - a block diagram representation of one of the steps of the methodology of the present the present invention, indicating the independent processing of a plurality of specialized models;
Figure 12 - a representation of the step of capturing an image from a point of sale, indicating the presence of a gap on a shelf;
Figure 13 - a block diagram representation of one of the steps of the methodology of the presentthe present invention, indicating the capture of price data for a specific product;
Figure 14 - a representation of the detection of an object pattern in the captured image;
Figure 15 - a block diagram representation of one of the steps of the methodology of the present the present invention;
Figure 16 - a block diagram representation of the steps of the methodology of the present the present invention;

### Detailed Description of the Figures

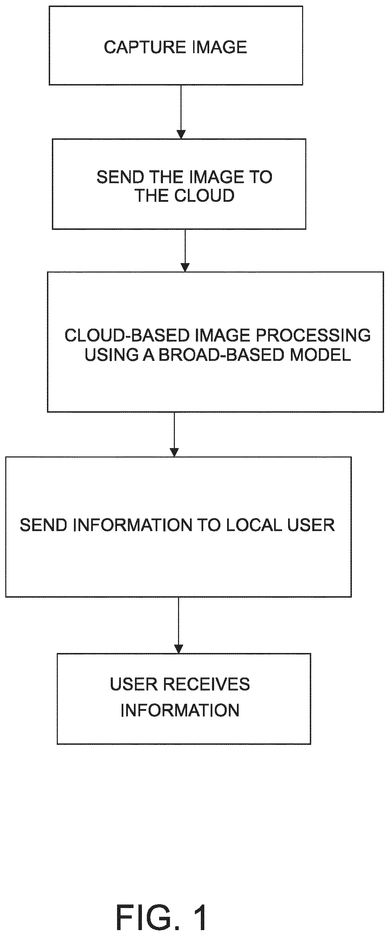

Referring to Figures 1 to 16, the present invention relates to a local image processing method and system for identification and classification of objects and generation of at least one KPI.

Seeking to overcome the obstacles of the state of the art, the present invention is intended to reduce the amount of data to be processed, thus optimizing the methodology for specific contexts compared to the state of the art.

With the methodology proposed by the present invention, it thus becomes possible to identify and classify objects locally on a mobile device, for example, with no need to rely on data stored in the cloud and with no need to be connected to the internet (network connection) at the time of taking the photograph.

Furthermore, the teachings of the present invention allow obtaining results within a brief period of time, so that the invention generally provides the user with a result in a matter of seconds, for example, less than five seconds. In some cases, the user is provided with a result immediately, even without an internet connection.

Furthermore, the present the present invention makes possible to obtain and generate various real-time indicators that may also be provided offline, such as the presence of objects (products) by category, the presence of objects by brand, the presence of competitor products by category, brand, and product, the shelf share by category, brand, and product, the shelf share of competitor products by category, brand, and product, the counting of product (for both own products and competitor products), conformity of execution with a planogram, the product placement (whether the product is placed in the right or wrong location, and in the expected quantity).

Consequently, the present invention allows multiple indicators to be delivered to the user of the current methodology. However, the proposed methodology does not require the use/purchase of expensive and powerful mobile devices with high processing capacity

As described in detail below, the teachings of the present invention are based on generating a specialized model by, for example, the object type, so that the said specialized model is obtained/generated from a previously known image.

Thus, the present invention proposes a methodology that may be implemented locally, meaning within the environment of the mobile device used by the user, whereby no internet connection is required.

Consequently, through the teachings of the present invention, infrastructure costs are lower and economic efficiency rises, enhancing user productivity as they are not dependent on an internet connection, and do not need to wait for cloud processing to be performed and completed.

With the present invention, the risks of user activities not being performed due to the absence of an internet connection are eliminated, which is a problem typically encountered in known methodologies at the state of the art.

Various other advantages obtained with the teachings of the present invention will be discussed subsequently in this description.

Referring initially to Figures 1 to 16, it may be understood that the present invention may initially be seen as a method of image processing and locally generating KPIs, as explained in detail below.

In general, the present invention relates to a method and system for processing an image locally. Briefly, the teachings of the present invention are based on the use of a mobile device such as a mobile telephone, tablet, smartwatch, monitoring camera, and similar devices, to capture an image of a specific location. The mention of a mobile telephone, tablet, smartwatch, monitoring camera, and similar devices should not be considered a limitation on the present invention, so any device able to capture an image of a specific location may be used.

In a valid embodiment, the captured image refers to a photograph taken at a point of sale, such as a shelf or refrigerator where various products are displayed for sale.

In an equally valid embodiment, the captured image refers to an image displayed on printed matter, such as the image on a menu or an advertisement (e.g., a sales advertisement) displayed in a public setting.

Figure 1 shows a block representation of a known image processing method as described at the state of the art. In other words, Figure 1 shows a known method that is currently in use but does not alone achieve the advantages provided by the present invention.

In an initial step, the method known at the state of the art is based on capturing an image. The said image may show a shelf at a point of sale, such as a shelf in a supermarket where different products are displayed. Furthermore, the said image may show the interior of a refrigerator/freezer, where products are displayed for sale.

Subsequently, the methodology known at the state of the art teaches that the said image will be evaluated, and the objects therein will be detected. In one embodiment at the state of the art, image evaluation occurs through cloud processing, meaning that the captured image is sent from the mobile device to a cloud environment.

The identification of objects in the image may be performed through computer tools developed specially for this purpose.

While on one hand, the state of the art discloses means for an object to be identified through image processing, on the other, it may raise some disadvantages, such as high processing capacity requirements and equally long processing times, as well as the demand for image processing to take place in the cloud.

Moreover, in addition to this dependence on cloud processing, the state of the art encompasses unnecessary information in its object identification processing, which merely delays and sometimes even prevents object identification.

Although the state of the art may provide methods for cloud-free processing in some situations, object identification still requires analysis and processing of large and unnecessary amounts of information.

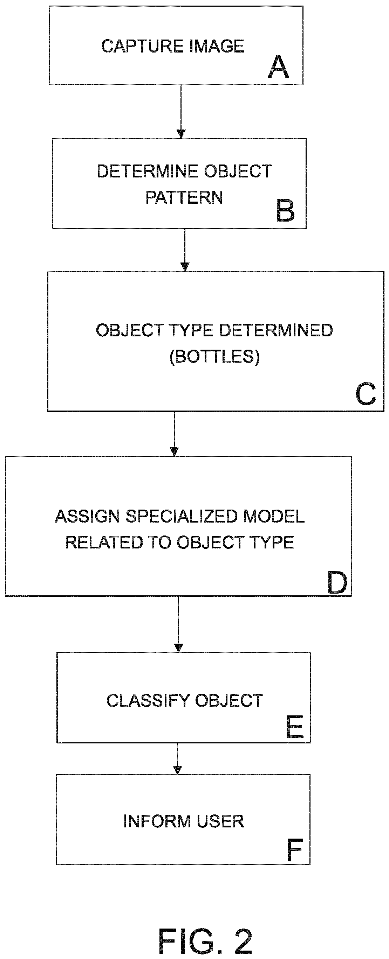

However, the present invention surmounts the disadvantages found at the state of the art through a local image processing method for object identification, classification, and generation of KPIs. Figure 2 is a block representation of the method proposed in the present invention.

In a preliminary step proposed by the present invention, the user defines an operating segment, which may be based on the site to be visited by the user, products with a specific brand, or tasks assigned to the user. For example, this user may be an operations manager at that site, a sales promoter representing a certain company, or a coordinator of the methodology described in the present invention.

In other words, this step should be understood as the definition of the type of that point of sale or business, such as a pharmacy, supermarket, mechanical workshop, or bakery, etc., for example. These are just possible examples and impose no constraints on this proposal.

Once this step of defining at least one operating segment is completed by the user through their mobile device 20, in order to classify the site based on the nature of its operations, the mobile device 20 can then receive at least one database related to the operating segment. Such databases may be provided from a general portfolio that encompasses multiple databases.

These steps are of the utmost importance for the teachings of the present invention because from there, meaning from the definition of the type of the point of sale, the type of the database or portfolio is established that the user will receive on their mobile device 20 for performing the other steps proposed herein.

In practice, this means that the user will receive only databases related to the field of operation at their point of sale or site. In other words, if the point of sale is a pharmacy, the user will receive only databases relevant to the pharmaceutical products sold therein and will not receive a database related to other products, such as automotive products, because such products will certainly not be found at that site.

However, in certain embodiments, a single point of sale or site may receive databases of different types. For example, if the point of sale or site is a supermarket or hypermarket that sells a wide range of items, it may receive a wide range of databases such as food products, personal grooming items, and electronics.

Consequently, if the point of sale encompasses a wide range of products, the teachings of the present invention allow the databases provided to the user to be adjusted (formed) in compliance with the characteristics of that point of sale. For example, the databases and their specialized models may be grouped according to the arrangement of a specific aisle at that point of sale.

Furthermore, while the benefits addressed by the present invention may also be absorbed by the manufacturers of specific products, it is understood that specific databases may be generated for the products made by such manufacturers.

Furthermore, by performing the two steps described above (defining the operating segment and receiving the corresponding database), this characteristic becomes highly advantageous as it achieves significant processing savings. There is a drastic reduction in the data processed, especially by the mobile device 20, compared to the state of the art, where there is no segmentation or selection of initially sent data. In the current situation, the user receives an entire database that includes all registered products, even if they are not part of the products sold at the site.

In one embodiment, the proposed steps of defining the operating segment and receiving the specific database of that operating segment (and consequently receiving the set of specialized models) should be performed, such as at the start of a specific work shift. It is thus known that the user of this methodology (such as a promoter), will visit a first point of sale during a work shift, that includes only products A and B, and then will visit a second point of sale that includes only products C and D.

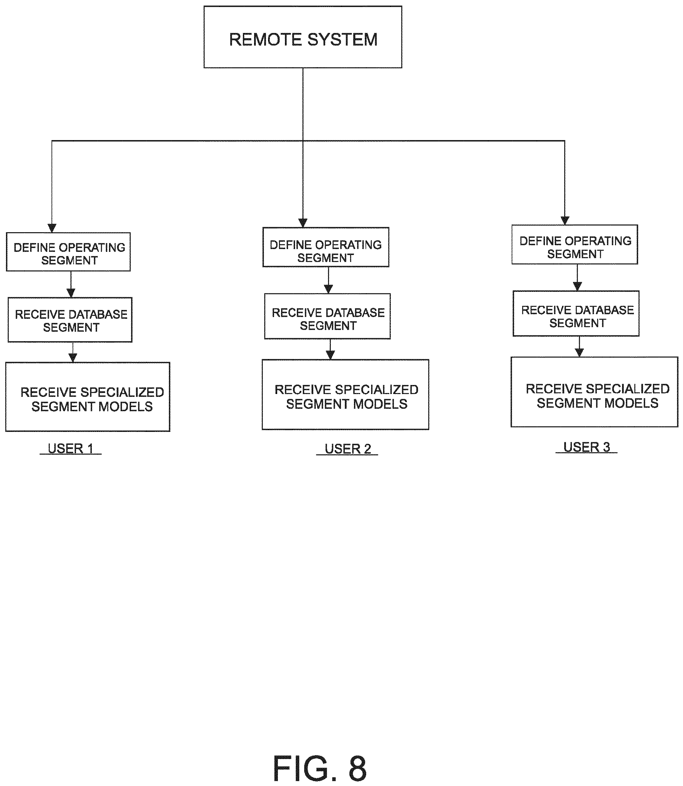

Before the user travels to the above-mentioned points of sale, the user must thus have the database (and the set of specialized models) pertaining to the first point of sale and the second point of sale loaded onto their mobile device. Such databases may be provided by the remote backend system, for example, such as a remote backend system that manages the application of the methodology addressed by the present invention. Reference is made to the content of Figure 8.

This remote system provides the database for each segment to a plurality of users, such as a plurality of promoters. Reference is made to Figure 8.

In an embodiment, this remote system is operated by a supervisor of users 1, 2, and 3, shown in Figure 8. For example, it is understood that this supervisor should define the types of products (product portfolio) that are (or should be) available in a particular store and how these products should be displayed at the point of sale to generate a good display for customers. It is consequently understood that the supervisor must generate a base planogram for a particular point of sale.

Moreover, it is proposed that each of users 1, 2, and 3 shown in Figure 8 receive a specific base planogram generated previously by the supervisor, whereby each base planogram includes the specialized models that should be used by the user, as further described below.

Thus, when generating a base planogram from the remote system, the database to be sent to the user shall include information on the generated base planogram. Furthermore, it is understood that each point of sale shall comprise its respective base planogram, which may be drawn up on the basis of the requirements of a manufacturer of a specific product, for example.

In a valid embodiment addressed by the present invention, the set of specialized models (and consequently the database) may be sent to the mobile device from a remote set of specialized models in compliance with certain criteria, such as time or placement criterion. For example, it is known that during the morning, a specific user (such as a sales promoter) will visit point of sale A, and during the afternoon, they will visit point of sale B. Consequently, during the morning, only the specialized point of sale A specialized model may initially be uploaded to the promoter's device, without loading the point of sale B specialized model.

Once a specific time criterion is reached, the remote system can then provide the specialized model related to point of sale B to the mobile device and optionally remove the model used previously for point of sale A. This time criterion may be programmed directly by the management of the remote system, through assigning the following instruction: after a certain time, update the mobile device with the point of sale B specialized model.

Alternatively or additionally, this criterion may be a placement criterion, meaning that the remote system may create an instruction indicating that the point of sale B specialized model should only be sent to the user when a change in the user's position is detected, moving from point of sale A towards point of sale B.

Obviously, this description should be understood as mere exemplification, whereby such criterion may include a plurality of specialized models, and not just models related to point of sale A and B, as described.

Furthermore, the present invention also proposes a step of capturing an image using a mobile device (step A), in other words, it proposes taking a photograph using the mobile device 20, such as a mobile telephone.

In a valid configuration addressed by the present invention, the captured photograph depicts an image of a specific environment, region, or area within the point of sale, such as a supermarket shelf where products are displayed for sale. Any site that comprises a product may be understood as a point of sale.

It is thus understood that the captured image will include at least one object pattern, wherein an object pattern refers to the object type detected in the image captured by the user.

In one embodiment, a particular product displayed on a shelf may be understood as an object pattern. Furthermore, the actual shelf where the product is displayed may also be understood as an object pattern.

After taking the photograph, the methodology proposed in the present invention includes a step of determining at least one object pattern in the photograph, shown as step B and illustrated in Figure 2.

The designation (definition) of the object type essentially in the captured image may be performed automatically by the proposed methodology addressed by the present invention, through the base planogram for example. Alternatively, the user may designate the object type in the image before or after capturing it.

For example, assume the user of this methodology is going to take a photograph of a supermarket section with a variety of wrapped loaves. In this case, before or after capturing the image, the user may input information to the methodology indicating that the photograph to be (or has been) taken will consist mainly of wrapped loaves. By making such a designation (either manually or using automatic designation), the methodology proposed in the present invention will certainly be more accurate. In an embodiment, this information is provided by the user through interaction with the mobile device.

Consequently, in the present invention, when an image (photograph) is captured (taken) using the mobile device, it will be determined whether the said image includes at least one object pattern.

Subsequently, as described in greater detail below, the present invention proposes assigning a specialized model linked to the image. More specifically, it is proposed that the specialized model be related to the specific object type patterns in the image. This leads to step D, as shown in Figure 2.

For example, referring to Figure 2, if the object pattern in the image is a bottle, the methodology described in the present invention will use a specialized bottle model, written specifically for the types of bottle expected to be found at that particular site.

It is thus understood that, according to an embodiment addressed by the present invention, each object type will have an equivalent specialized model. In other words, if the object type in the photograph is "soda pop cans," there will be a specialized "soda pop can" model.

Furthermore, in an equally valid embodiment, each specialized model may be created for products that the user expects to find at a particular point of sale, defined through the base planogram generated by the remote system.

It is also understood that the types of objects (object patterns) and their respective specialized models may be classified under broad designations, as well as increasingly restrictive classifications within such broad classifications.

For example, there may be an object type and its corresponding specialized model classified as "soda pop cans," but there may be an additional object type classified as "350 ml soda pop cans" along with its respective specialized model. Furthermore, a particular specialized model may include only soda pops made by a specific brand, as well as those made by a specific competitor, eliminating the need to know the details of all soda pop brands.

Furthermore, there may be an object type and an even more specific specialized model, for example, "350 ml commemorative Christmas soda pop cans."

Thus, based on the captured image, the methodology proposed in the present invention will assign a specialized model, either a broad-based model or a specific specialized model, whereby the definition of which specialized model will be used may be handled by the user of this methodology, or may also be provided to the user according to the sites to be visited on a particular workday, steered by the products that the user expects to find at the point of sale, which are obtained from the base planogram, for example.

It is thus understood that the present invention is based on a certain specialized model related to a certain object type, in other words, the present invention is based on the use of specific specialized models related to objects (products) that a user expects to find at a certain point of sale.

Based on the description presented above, it is worth noting that the specialized model for each object type will be provided through the operating segment database. It is thus understood that a single operating segment database may comprise a plurality of specialized models for different types of objects, whereby these models are independent of each other.

Consequently, the operating segment database may be understood as being the branch of a specific point of sale, for example, medications (drugstore), sporting goods, clothing, eyewear, shoes, and beverages, among others.

However, the specialized model for each object type refers to the object type available at that point of sale, for example, shaving foam, soccer balls, men's shirts, sunglasses with black frames, high-heeled shoes, bottle of vodka, among others. It is worth noting that a certain specialized model may be defined based on various criteria, such as products from a specific manufacturer, as well as the products available at a point of sale.

Subsequently, the methodology described in the present invention proposes that the object(s) in the image be classified (Step E) using the specialized model, with the user then informed that the object has been classified, in other words, obtaining information about what the object is (Step F). In one embodiment, the user will receive an indication of which object was recognized on the screen of the mobile device that took the photo.

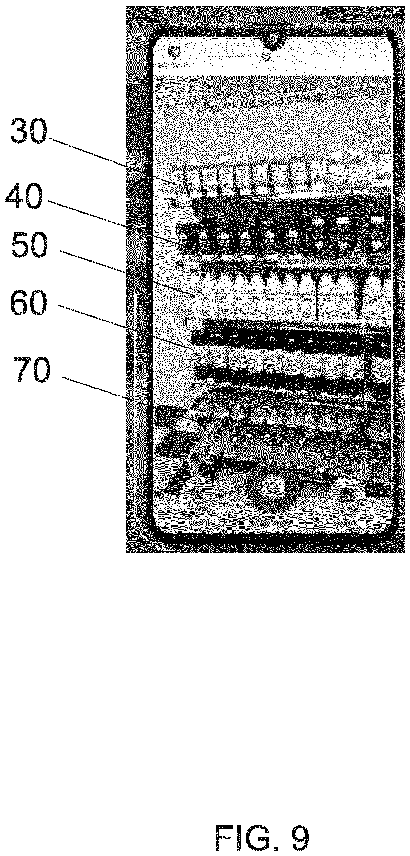

Figure 9 illustrates an example of one way to apply the teachings of the present invention. In this exemplification, it may be noted that a particular user captured an image of a point of sale that includes a plurality of object patterns.

Consequently, based on the illustration in Figure 9, at the top portion of the shelf, there is a first object pattern 30 designated as mustard, followed by a second object pattern 40 designated as ketchup, followed by a third object pattern 50 designated as milk, followed by a fourth object pattern 60 designated as grape juice bottle, and followed by a fifth object pattern 70 designated as a water bottle.

It is worth noting that the user may be able to make adjustments to the captured image (or to be captured) in order to enhance the object recognition accuracy. The user may thus calibrate the light of the captured image. for example, or may calibrate the light before capturing the image. It is important to mention that such adjustments must be made by the user by adjusting the settings of the mobile device. Other types of adjustments may be made directly by the user, such as cropping the captured image to designate a specific area for analysis by the methodology.

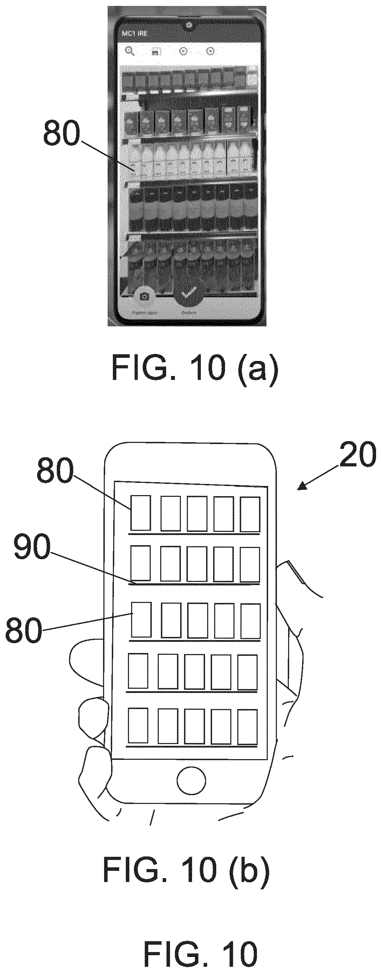

Once the image has been captured, as shown in Figure 9, the objects in the image will be detected. This step is exemplified in Figure 10. It is proposed that the user receive an indication 80 that the objects in the image have been detected. This indication may be of any type, as long as it is perceptible to the user (such as a graphical, auditory, and/or text indication). Figures 10 (a) and 10 (b), thus show a graphic indication 80, where each detected object is outlined by a rectangle, for example.

In a non-limiting embodiment, the user may enable the display selectively through the mobile device 20, whereby the graphic indication 80 is generated only for products that are part of the base planogram.

Furthermore, besides the graphic indication 80 related to the detection of the actual object, it is also possible, or optionally, to indicate to the user that a shelf has been detected, as shown in Figure 10 (b) by the indication 90. Consequently, this methodology is able to detect not only the object but also detect that the said object is effectively placed on a shelf.

Detecting that the object is effectively placed on a shelf is advantageous because, once the product has been identified, the product size may be estimated based on graphic indication 80, and then the metric dimension of the area may be calculated, thus determining a Share of Space Key Performance Indicator (KPI). It is worth noting that product size could alternatively be a pre-set data.

Consequently, graphic indications 80 acts as signals to the user, telling them that a product (object pattern) has been detected in the photo. It is thus understood that each graphic indication 80 corresponds to a product, whereby the number of graphic indications 80 may be added together to determine the number of products displayed on the shelf, for example. In simple terms, the graphic indication may be understood as a thumbnail or even a cropped segment of the captured photograph, whereby there is a product within that thumbnail (i.e., within the graphic indication).

It is worth noting that Figure 10 (b) does not include the numerical indication 80 for all the graphic indications, avoiding excessive clutter in the Figure. However, it should be understood that all the rectangles shown in the figure correspond to a graphic indication, thus referring to a detected product.

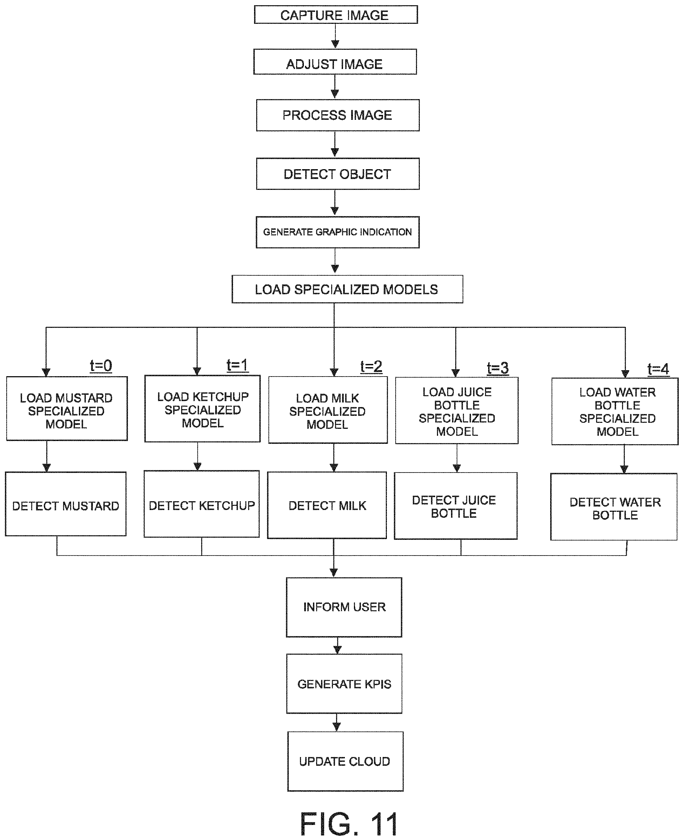

Figure 11 is a block representation of the steps considered by the methodology addressed by the present invention for the object identification patterns shown in Figures 9 and 10.

As previously described, the initial steps involve capturing and adjusting the image. This adjustment may be understood as cropping the image or adjusting the lighting and/or perspective. Subsequently, local processing of the captured image begins, in other words, the processing of the image on the mobile device 20.

The step of locally processing the image may be understood as detecting at least one object pattern in the captured image, in other words, recognizing that there is an object in the image (even if it might not yet be classified).

Once an object pattern has been detected, the next proposed step is to generate a graphic indication on the captured image for each detected object pattern. In other words, for each detected object, a graphic indication will be designated on the image displayed on the mobile device.

It is important to note that the step of generating the graphic indication also includes registering the coordinates of the graphic indication in the captured image, thus making it possible to store such coordinates and establish the correct position of the graphic indication (and consequently the product) in the image. In a possible embodiment, these coordinates may be Cartesian coordinates and consist of points (X, Y) on a plane of the image.

Subsequently, based on the graphic indication, the specific specialized model(s) to be used for the object classification must be loaded.

In the specific case shown in Figure 11, it is known that the particular point of sale comprises the following products: mustard, ketchup, milk, juice bottle, and water bottle. Consequently, these will be the specialized models loaded and used for the classification of the product to occur.

In order for product recognition to occur offline and without any restrictions, it is proposed that each object type be processed independently. In other words, for each object type, a specific processing flow may be created on the mobile device.

Consequently, the proposed methodology can establish independent processing flows for each object type, whereby such processing is performed directly on the mobile device. It should be noted that, in the context addressed by the present invention, the specialized model must be understood as the object type that has a specific set of defining characteristics (recognition pattern). Examples of specialized models include: clothing items such as footwear, t-shirts, trousers, socks, and shorts; food items such as packets of rice, beans, cookies, juice, and cereal bars; and household utensils such as containers, pots, utensils, paper towels, and aluminum foil.

These are obviously merely illustrative examples and impose no constraints on the present invention, presented here particularly to illustrate an embodiment of the invention and some possible specialized models that may be used at a specific point of sale where the present invention is deployed.

Furthermore, in the context addressed by the present invention, it should be understood that a pipeline represents a workflow that is generally related to data processing. In greater detail, a pipeline may be understood as a processing flow for each detected or recognized object type in each captured image, for example. In other words, the pipeline represents the action of assigning, defining, or classifying each detected object in terms of its respective specialized model. It is once again stressed that each pipeline may be handled individually for each object, as shown in Figure 11. It should be noted that a pipeline may be implemented through the use of multiple models, and their results may be combined or linked together.

Referring to Figure 11, it may be noted that processing is created for each object type (mustard, ketchup, milk, juice bottle, and water bottle). In other words, independent processing flows are created locally on the mobile device 20 with no need for an internet connection.

More specifically, it is proposed that each pipeline be considered separately from the subsequent pipeline. For example, based on the illustration in Figure 11, it is proposed to initially process the flow for mustard, followed by the flow for ketchup, then the flow for milk, and so on.

This means that each specialized model is processed within a certain timeframe, independent of the subsequent specialized model. More specifically, each specialized model is processed separately from other specialized models.

Based on the illustration in Figure 11, the specialized model for mustard is processed at time t=0, the ketchup model is processed at the following time t=1, the milk model is processed at the next time t=2, the juice bottle model is processed at t=3, and the water bottle model is processed at t=4.

By processing each pipeline separately, it thus becomes possible to optimize processing directly on the mobile device. At each moment, a small amount of information is processed in the processing flow, with no need for an internet connection and with no constraints on image size or the number of objects in the image. In other words, the present invention advantageously provides a distributed embodiment of independent processing flows, using only the computational capacity of each mobile device 20, locally and in an optimized manner.

It should thus be noted that processing flows may be implemented by using threads or processes, for example.

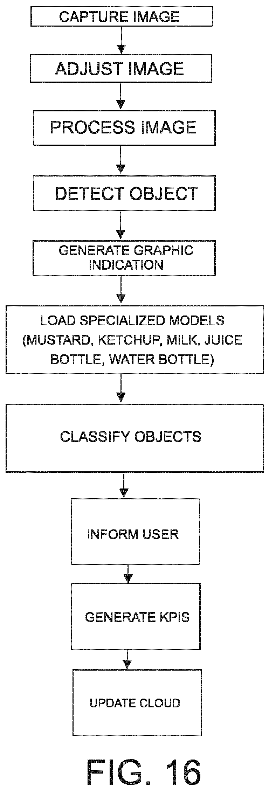

It should additionally be noted that the teachings of the present invention, as well as the above description for Figure 11, also encompass the block diagram shown in Figure 16.

Consequently, after the generation of graphic indications and referring to Figure 16, a single specific specialized model is loaded for that particular point of sale. This specialized model has already been trained to identify and classify the products displayed at that point of sale. In this case, it includes mustard, ketchup, milk, juice bottle, and water bottle.

Alongside the above, it is emphasized that a specialized model should be understood as a dataset, such as a file or a cluster of specific information related to the type or nature of a particular object. It may be read and processed by a computer or a mobile device 20, such as a mobile telephone. Furthermore, the specialized model may also be stored on the said computer and/or mobile device 20.

When stored on the specialized model, there should be at least one recognition pattern associated with at least one specific product. This recognition pattern indicates that a specific product has a certain characteristic, and this characteristic allows the identification and classification of the product through the processing of the specialized model.

Consequently, the recognition patterns stored in the specialized model may be understood as shape patterns, meaning datasets indicating that a specific product has a certain shape. These datasets may be understood as collections of points, representing a specific arrangement of points on a pack that indicates a particular product. It may thus be established during the creation of the specialized model that this number of points is sufficient to detect the object and also sufficient for the model to be loaded and processed locally on the mobile device.

Alternatively or additionally, the recognition pattern may be understood as an image, such as an image of a product, in other words, the image demarcated by the graphic indication. Consequently, the specialized model may be created from an image of a product, preferably from multiple images of the same product, whereby the specialized model may be used in the field.

For example, a specific chocolate manufacturer may issue a catalog of its products, including photographs of the chocolates and their respective classifications (which chocolate it is). The management staff responsible for using the proposed methodology may create specialized models for this manufacturer based on the photographs and classifications in the catalog in question. In this case, the recognition pattern may be understood as the actual photograph, or a portion of the photograph displayed in the catalog.

In some situations, creating a specialized model based on a few photographs may result in insufficient accuracy when put into practice, or might require a significant amount of time to train adequately. It is thus proposed that techniques such as data augmentation may be used on the images as initially received.

Consequently, these data augmentation techniques using photographs from the catalog, for example, allow the creation of a specialized model with excellent accuracy, despite the small number of initial photographs.

As an example, several data augmentation methods may be applied to the images as initially received, such as scaling, translation, rotation, flipping, noise addition, dropout, and contrast manipulation, among others.

Alternatively or additionally, the recognition pattern stored in the specialized model may also be understood as a color pattern. In other words, it may be a dataset indicating that a particular product has a specific color or a specific array of colors.

Alternatively or additionally, the recognition pattern may also be understood as a text pattern. In other words, it may be a dataset indicating that a particular product includes specific text on its packaging.

In other words, some characteristics that may also be related to the dataset are related to the color palette of a specific object, as well as any textual information associated therewith. These characteristics may be used particularly to distinguish potentially similar objects, such as a pack of rice and a pack of beans, which have substantially the same shape and are primarily distinguished by their colors and text on their packs.

However, in order to attain the purposes of the present invention, it is advisable not to include a large recognition pattern set in a particular specialized model. Instead, only the necessary patterns should be used for recognizing the object through processing the specialized model on site.

It should be noted that it is entirely possible to adapt the specialized model to include only the necessary object detection recognition pattern, as the teachings of the present invention allow the transmission of each specialized model to the user, based on the defined operating segment.

Consequently, when an image of a point of sale is captured by a user, processing that image may be understood as the detection of at least one object pattern for each of the products arrayed on the shelf.

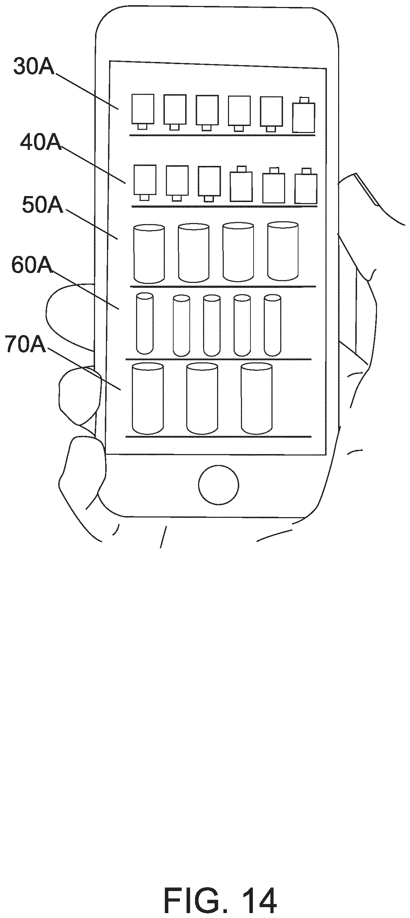

Consequently, referring to at least Figures 9 and 14, for the first object type 30, a first object pattern 30A will thus be detected; for the second object type 40, a second object pattern 40A will be detected; for the third object type 50, a third object pattern 50A will be determined; for the fourth object type 60, a fourth object pattern 60A will be detected, and for the fifth object type 70, a fifth object pattern 70A will be determined. An object pattern may be understood as the image of the object demarcated by the graphic indication 80, for example.

Consequently, each of the object patterns 30A, 40A, 50A, 60A, and 70A detected must be evaluated with their respective recognition patterns stored in each of the specialized models. As previously described in the approach such as that shown in at least Figure 11, it is proposed that each of these evaluations is run separately. In other words, the first object pattern 30A should be evaluated with its respective recognition pattern, and once that evaluation is completed, the processing should proceed to the next one.

The evaluation between the object pattern and the recognition pattern should be understood as the application of an input (in this case, the object pattern) to a function (in this case, the recognition pattern in the specialized model) to obtain an output.

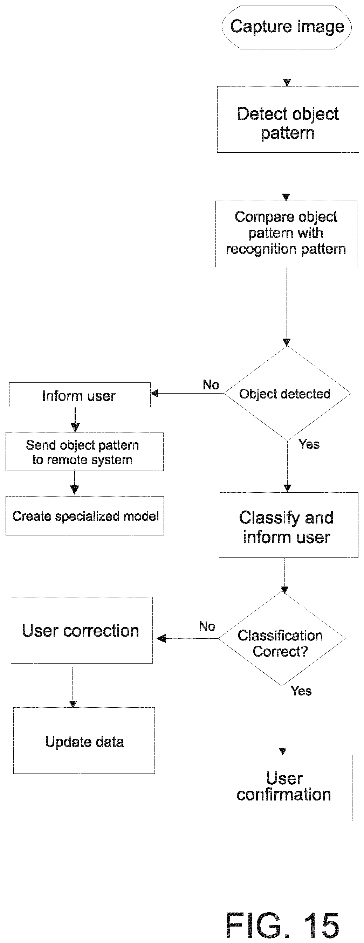

Consequently, also based on the illustration in Figure 15, if the comparison between the object pattern and its respective recognition pattern indicates that a product has been recognized, it should inform the user, indicating which product it is (product classification).

Referring to Figure 15, if the object classification has been performed correctly, the user may provide confirmation. Alternatively, if the classification was incorrect, the user must generate an update data through the mobile device. In other words, emit training data for the model, indicating that the particular object pattern does not correspond to the reported product. Additional details regarding the update data will be presented later.

Consequently, once the object has been detected in the image through local processing, information on the object type is provided directly to the user on their mobile device. There is no need for any type of cloud processing. With this, the KPIs are also generated directly on the mobile device. In other words, from the generation of capturing the photo for each detected product and its respective product classification, various types of KPIs may be generated locally on the mobile device. With the present invention, KPIs are thus generated and displayed on the mobile device within a few moments, for example, three seconds after taking the photograph.

At a later time, when the user establishes an internet connection, these KPIs may be sent to the cloud.

Furthermore, referring to Figure 15, if the comparison between the object pattern (captured image) and the product recognition pattern (specialized model) does not detect a product (or shelf) that should have been detected, the user may then indicate that the product was not detected. If desired, the corresponding object pattern should be sent to the remote system.

Consequently, upon receiving the object pattern, the remote system operator may, if desired, create a new specialized model that includes a new product recognition pattern corresponding to the previously captured object pattern in the image. Furthermore, the operator may add the object pattern to an existing specialized model, enhancing its understanding of the object pattern.

Having created this new specialized model, the product in question will be thus properly identified and classified in future image captures.

It should be noted that the step of sending the object pattern to the remote system should preferably be performed when the mobile device establishes an internet connection.

To recognize the object in the image, open-source tools like YOLOv5 may be used. However, according to the teachings of the present invention, it is proposed to use specialized models specific to each object type, rather than a single model for a plurality of objects. It is further proposed that these specific specialized models be processed separately, as described above.

Furthermore, it is understood that the present invention may make use of various image recognition techniques, such as models based on machine learning and, more specifically, deep neural networks. These techniques may include different types of layers and architectures, such as CNN, RNNs, and Transformers.

Consequently, the present invention is based on specialized models related to specific types of objects, rather than relying on a single general model. This avoids excessive memory usage and unnecessary data processing.

In more detail, it should be understood from these teachings that there will be a respective specialized model for each object type in the captured image. For example, bottles, soda pop cans, and wrapped loaves, as well as products made by a specific brand.

Thus, each specialized model may be processed individually on the mobile device 20, independently for each specialized model, unrelated to other specialized models in any way.

In practice, this allows the specialized "bottle" model to be processed separately from the specialized "soda pop cans" and "wrapped loaf" models, for example.

In other words, this step may be understood as the creation of a unique workflow or "pipeline" for each specialized model, drastically reducing data processing requirements, as each specialized model is processed individually on the mobile device 20.

The specialized models used in the present invention may be obtained from a set of specialized models. The said set of specialized models may be understood as a storage base (like a memory) that stores a series of specialized models, either they are broad or narrow (restricted) specialized models.

Furthermore, it is proposed that the set of specialized models be stored locally on the mobile device and obtained from the remote set of specialized models (stored in the cloud) used by the user, meaning that the set of specialized models will be stored directly on the mobile device, rather than in a cloud environment.

Aligning with the matters discussed above, it must be stressed that, according to this proposal, the mobile device 20 will receive only sets of specialized models corresponding to products that will actually be used by the user.

For example, if the user is in an environment that sells only food products, they will not receive a set of specialized models related to personal grooming items at this step. It is thus possible to reduce the usage of the mobile device 20, resulting in beneficial processing savings.

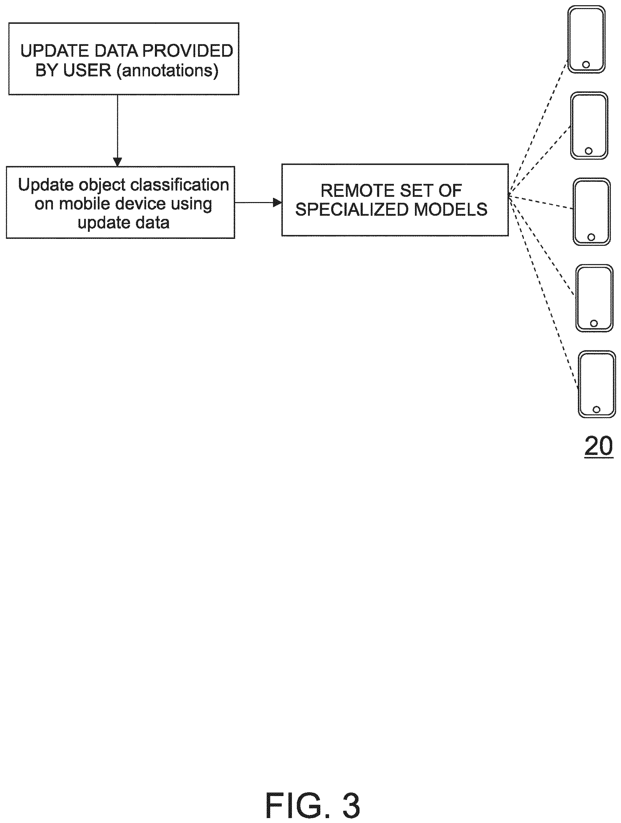

Furthermore, with reference to Figure 3, the methodology described in the present invention may be updated in real-time based on the update data provided by the user of this methodology.

For example, suppose that the user has received information that the recognized object is product A while implementing the proposal addressed by the present invention, when the said object actually refers to product B. In this case, the user may indicate through the mobile device that the object recognition was incorrect and update the provided information, in other words, update the information (classification) indicating that the respective object pattern refers to product B and not product A. Consequently, the previously stored information will be updated to reflect that the object in the image truly corresponds to product B. In this way, the user provides an update data for the proposal addressed by the present invention, whereby the said update data contains information that the image (object pattern) truly corresponds to product B and not product A. This step is commonly known as "annotation" or "annotations."

In the local annotation process, when correcting identifications, the user may decide to choose only from among products in the base planogram. With this method, the selection process is simplified, whereby the industry may annotate faster, with the process distributed among people.

Once this is done, the update data provided by the user from their mobile device 20 is automatically used to update the remote set of specialized models as well as updating the comparison between the object pattern and the product recognition pattern. This ensures that the comparison between the said object pattern and the specialized model obtained from the update of the remote specialized model is correctly indicated to the user as product B, in future readings.

This step beneficially allows the classifications to be accurately correct, as the users themselves have an interest in capturing the image and obtaining the data accurately.

Furthermore, as this step may be done by the users themselves, meaning the user who performed the image capture also updates the object classification, it is possible to establish a learning feedback channel for the proposed methodology and scale it advantageously by distributing the annotation process among multiple users, rather than handling it only in the back office.

This is because, with each user performing their own updates and thus updating comparisons between set of specialized modelss and object patterns, all other users also using the set of specialized modelss who happen to detect the same object pattern will benefit from the update made by that user. This generates a cascade or domino effect, making the present invention scalable and extremely advantageous, compared to the current state of the art.

As the set of specialized models is stored locally on the user's mobile device, the update based on the update data is also performed locally, meaning directly on the mobile device.

Nevertheless, to ensure that this update is captured not only by the user of the mobile device sending the update data, the present invention proposes that the said update data be sent from the mobile device to a remote environment, such as a cloud environment, that includes a remote set of specialized models. Consequently, when the internet is available, the mobile device will send only the portions of the images that have been corrected, meaning only the part of the image (graphic indication 80) that pertains to the product targeted by the annotation, with no need to send the entire image. This way, less bandwidth is used.

Consequently, the methodology described in the present invention proposes a synchronization step of the remote set of specialized models, based on the update data and with this synchronization occurring when the mobile device comprising the set of specialized models (and thus the update data) establishes a connection with the Internet.

Thus, the synchronization between the update data and the remote set of specialized models occurs in a manner whereby the information already in the remote set of specialized models is updated with the information in the local set of specialized models.

Hence, the data in the remote set of specialized models may be sent to a plurality of other mobile devices running the methodology proposed in the present invention, meaning they are sent to the set of specialized modelss in each of the mobile devices 20 running the methodology proposed in the present invention. It should be noted that this sending will occur when each of the mobile devices 20 is able to establish an internet connection.

This consequently ensures that the update data received from the mobile device 20 will be transmitted to the remote set of specialized models, thus ensuring that the update data provided locally by a single user is received by all users of the methodology.

These characteristics are of paramount importance, as they offer significant advantages over the state of the art, particularly through making the present invention scalable, because each user may perform this synchronization individually, thus benefiting all other users addressed by the present invention on a larger scale.

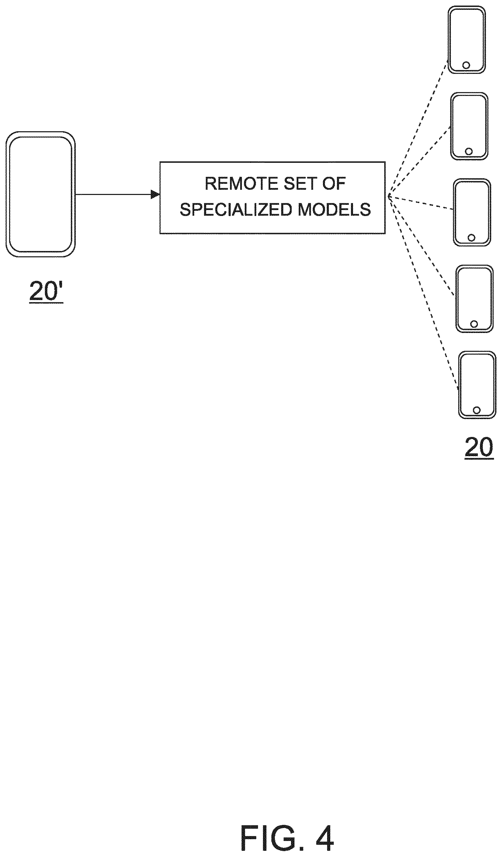

Briefly, and with reference to Figure 4, the update data travels from a local environment (set of specialized models in a first mobile device 20') to a cloud environment (remote set of specialized models) and subsequently to other local environments (set of specialized modelss already based on the updated remote specialized model). As a result, it ensures that if the same object pattern is newly detected in an image, it is more likely that an accurate classification will be informed to the user this time.

As mentioned above, the present invention is based on capturing an image using a mobile device 20, 20', in other words, taking a photograph using a mobile device such as a mobile telephone.

In a valid embodiment addressed by the present invention, the image capture step may be understood as taking a single photograph, which will be processed according to the teachings of the present invention.

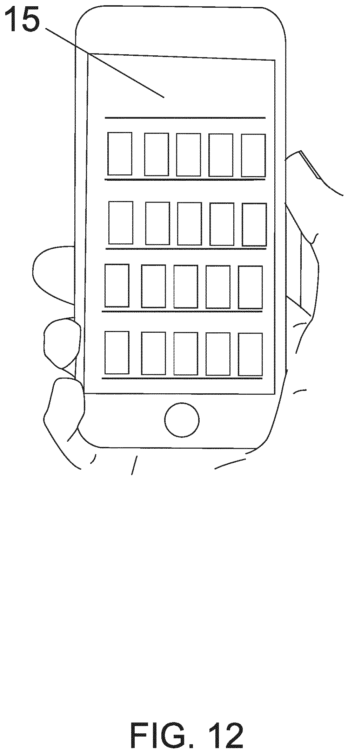

It is also possible to detect if there is an empty space or gap 15 on a shelf, as shown in Figure 12, in other words, at least one unit of a certain product is lacking when capturing that image.

In other words, and in practice, the present invention also applies to a possible situation where there is a shortage of a certain product, either partial, i.e., the absence of at least one unit of that product, or total, i.e., the absence of all units of that product. Such a shortage is referred to as a gap 15. The missing product detection may be performed, for example, by comparing the captured image with a reference image, such as a base planogram.

The detected gap may also be related to a specific object type, as the user is aware that the shelf contains certain specific types of objects.

In this case, an additional step is performed to inform the user through the mobile device 20 that the product is missing or absent from the shelf. This information may be conveyed through text, audible alert, vibration, etc., for example, so the warning method is not a limitation imposed on the present invention and may be implemented in various ways.

After this step, the present invention may further include a step that allows the user to replenish the missing product. Such replenishment may be handled through purchase or acquisition from a supplier, or by obtaining such product from internal or external stock.

It is thus possible to integrate this proposal into a platform for acquiring missing products. In other words, it is possible to purchase the detected missing product through the image captured by the mobile device 20 and proceed with the replenishment thereof, if so desired by the user.

Consequently, it must be understood that the object type detected in previous steps may also be related to an indication of its absence or shortage, as described herein.

The said step of image capture, missing product detection, and product procurement requisition may be undertaken by the store owner (retailer), for example.

Thus, the teachings of the present invention may be absorbed by a specific user, who may be either a promoter visiting a point of sale to check how certain products bearing their brand (or competitor brands) are displayed at the point of sale, or the retailer who owns the point of sale. It is nevertheless worth mentioning that the objects considered here may be classified as "objects of interest" and "objects of non-interest," and are named according to the user's interests.

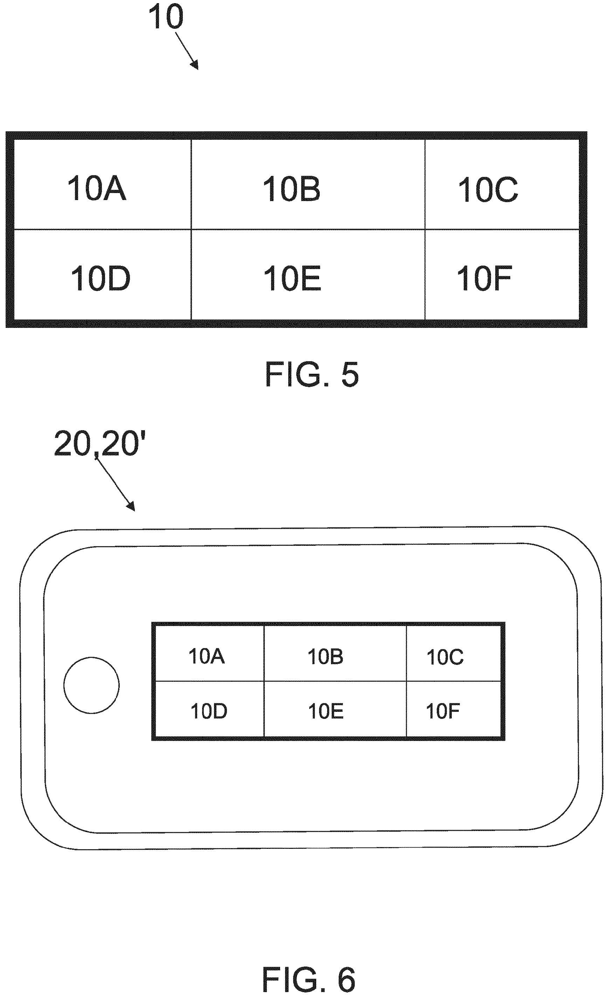

In other equally valid embodiments, the methodology proposed in the present invention proposes that the image captured by the user may be formed from an image map 10, whereby the image map 10 consists of a grouping of a plurality of images (two or more images) captured using the mobile device 20 or 20'. Figure 5 shows an image map 10 composed of images 10A, 10B, 10C, 10D, 10E, and 10F.

The proposal of using the image map 10 is advantageous when the methodology addressed by the present invention must be used in very large environments, in other words, where it is not possible to capture a single image (photo) of the entire environment.

In this case, the user must capture multiple images 10A, 10B, 10C, 10D, 10E, and 10F of the environment and add them to the image map 10. In other words, the user adds each of the photographs that will comprise the image map 10 to the mobile device 20, 20', and this addition may occur both horizontally and vertically, i.e., in the X-axis and Y-axis of the image map 10, or in more common terms, in portrait or landscape orientation.

It is thus understood that the image map 10 may be seen as a 2D map, where the user may add multiple photographs on the mobile device 20, 20' to assemble the image map 10 and then generate a single image to be processed. It is also understood that the user may move each of the photographs on the image map 10, for example, using their fingers, to create a suitable image map 10. Hence, the user interacts with the mobile device 20, 20' to generate the image map.

Once the above-mentioned image map 10 has been generated, meaning that all the photographs that will comprise the map have been grouped according to user instructions, the image map 10 is converted locally into a single photograph, and the methodology described in the present invention may proceed. This step is also known as image mashing.

The generation of the image map 10 also brings countless advantages compared to the state of the art. For example, assuming that the user needs to capture images of an aisle that is five meters long. At the state of the art, the user would typically take one photograph per meter, and each of these photographs would be sent to the cloud for independent processing, whereby customer indicators are generated for the photograph, but not for the entire space.

In the present invention, as already described, the user obtains a plurality of photographs covering the same five meters, generating the above-mentioned image map 10. All the captured photographs are then converted locally (on the mobile device) into a single photograph, resulting in much more accurate indicators and with greater processing efficiency, as only one image will be processed, rather than several.

It is thus understood that in the present invention, the image map 10 is generated by the users themselves locally on the mobile device, without requiring a cloud environment. Similarly, the above-mentioned image map 10 is converted into a single photograph, and this conversion also takes place locally on the mobile device.

Figure 5 presents an example of the image map 10, which is formed by grouping each of the images 10A, 10B, 10C, 10D, 10E, and 10F captured by the user. It is further understood that the image map 10 must be displayed on the screen of the mobile device 20, 20', as shown in Figure 6.

In relation to the captured images, the present invention also proposes an image quality detection tool, as the captured image may be blurred, too dark, or illegible. In this case, the present invention includes a step suggesting a new image capture.

Another tool proposed in the present invention, also related to editing the already captured image, is called "autocrop" or "automatic cropping." This tool allows the captured image to be cropped with a single command on the device 20, excluding irrelevant parts of the image around a specific area of interest. For example, it may exclude the ceiling or floor of the environment and retain only the shelf to be identified.

In any case, the present invention is based on the use of a specialized model related to a specific object type in the image captured by the user.

The precision of the methodology in object recognition tasks is thus enhanced, as each object type has its own specialized model. Consequently, by working with a specialized model for each object type (unlike the state of the art with a single model for a variety of objects), model size may be reduced, allowing the advantages of the invention to be achieved.

For example, in Figure 2, where the specialized model refers to the object type understood as a "bottle," precision in recognizing this object type is enhanced by applying the teachings of the present invention. In other words, the model's accuracy in identifying a bottle in an image is enhanced.

Hence, using multiple specialized models for different types of objects enhances the overall precision of the methodology.

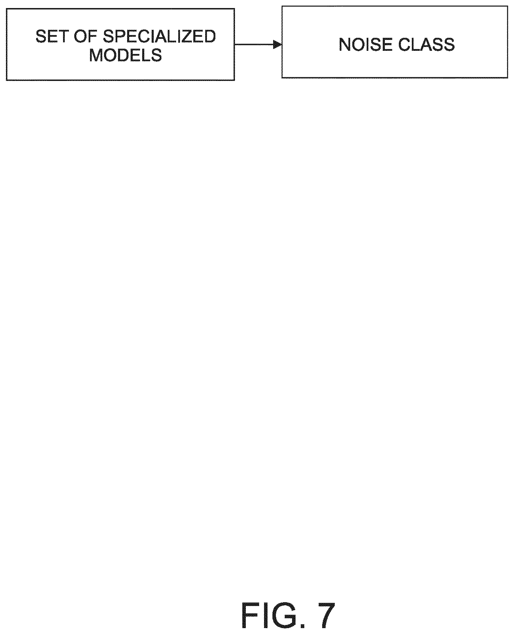

An additional characteristic addressed by the present invention lies in the fact that each specialized model must also be associated with a noise class. Hence, each of the specialized models in the set of specialized models will be associated with a respective noise class, as shown in Figure 7.

It is thus understood that each specialized model associated with a particular object type will be linked to a noise class.

The purpose of the noise class is to enhance the precision of the proposed methodology. If the use of a specialized model related to a specific object type incorrectly recognizes an object, resulting in an incorrect outcome, that incorrect outcome will be assigned to the noise class associated with that specialized model. This allows for constant enhancement of the proposed methodology.

It is thus understood that the noise class may be modified, generated, and updated on a case-by-case basis, according to the specialized model with which it is associated.

As an example, noise may be understood as any information in the captured image that interferes with the identification and object classification. For example, a merchandising sign at least partially overlapping a product is considered noise, as well as fogged glass on a refrigerator. In general, noise may be understood as any extraneous information in the captured image that hinders or hampers object identification according to the teachings presented here.

In one embodiment addressed by the present invention, it is possible to obtain geometric characteristics of the product after image capture, such as product dimensions and packaging. It is also possible to identify other relevant visual information, such as color palettes, typefaces, etc. Thus, the present invention includes a step of detecting product pack dimensions. Packaging dimensions means the dimensions of the object captured by the mobile device camera. Furthermore, in an equally valid embodiment, the geometric characteristics of the product may also be obtained from planograms, for example.

Based on the geometric characteristics, the area and volume of the product may be calculated, thereby assessing the space it occupies on the shelf in order to obtain relevant indicators called Key Performance Indicators (KPIs).

Among these indicators is the "share of space" indicator, which may be advantageously obtained. This indicator relates to the space occupied by a particular product, for example, on a shelf, and allows for evaluating whether it is beneficial to maintain it in a certain position and arrangement or if alterations in provision or positioning are necessary.

In a possible configuration addressed by the present invention, it is further proposed that information areas related to the above-mentioned packs and products may be detected, through the step of capturing images using a mobile device.

These information areas may correspond to a variety of relevant data about the products and their packs, such as price tags, promotions, alphanumeric textual information, interactive activations, barcodes, QR codes, NFC tags, etc.

For these information areas, it is proposed that they be captured in an image and duly identified, whereby additional information such as price and promotions may subsequently be associated with the respective products also captured in the image, according to the above-mentioned teachings.

In a valid embodiment, the present invention also proposes the implementation of a step to include data related to information areas in the specialized model associated with the object type.

More specifically, such data related to information areas may be understood as being the price of a particular object type. The specialized model for each object type will thus contain not only data indicating what that specific object is, but also data indicating the price of such specific object at a certain point of sale.

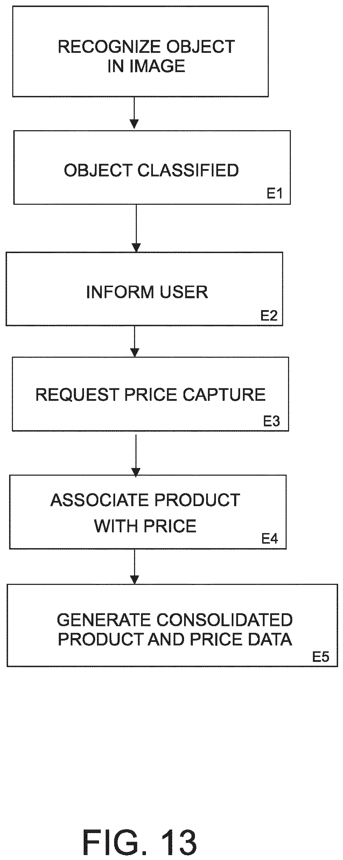

In one embodiment referring to at least the illustration in Figure 13, the proposed methodology in the present invention teaches that after the object has been classified in the image (step E1), the user will be provided with information on the electronic device screen about the recognized object (step E2). Subsequently, the user will be prompted to capture data related to the price of the recognized product, as indicated in step E3.

Hence, the user will have to capture an image of the price label of that product, using the electronic device. Then, as shown in step E4, the photographed price of that particular product will be associated with the respective product. For example, a specific product (grape juice) will be associated with a price of BRL 10.00 at a particular establishment. As a result, consolidated product and price data will be generated, as indicated in step E5. Furthermore, it is worth noting that product groups may be predefined, whereby the price may be shared among them, thereby reducing the number of price photographs that must be taken. For example, all 50g juices may be grouped together, requiring only one photograph to be taken of grape juice to obtain the prices of lemon and other juices.

It is important to highlight that it is not necessary for the user to capture a photograph of the product price label. In certain embodiments, the photograph captured by the user of the shelf at the point of sale permits the identification of the product and its price. Consequently, the price may be automatically associated with the product, generating the above-mentioned consolidated data discussed in step E5.

In a valid embodiment addressed by the present invention, the described methodology also includes a step of generating an orientation report based on the generated KPIs. More specifically, the orientation report should be understood as providing an indication to the user, preferably through a text message, indicating whether the planograms detected in the field were in conformity with the base planogram. It also informs the user about the reasons for non-conformity in the detected planograms, through a text message, and suggests an action plan for the user to correct the non-conformities.

It is proposed that the orientation report be generated using an artificial intelligence system like GPT or LLMs, for example, where the artificial intelligence system is responsible for interpreting the KPIs and providing the orientation report to the user. It should be noted that the orientation report need not be generated by artificial intelligence.

Another object addressed by the present invention is a local image processing system for object identification and classification, as well as KPI generation, comprising at least one mobile device that may be connected to a network such as fixed or mobile internet, a local network, etc., and a remote database with a general portfolio.

It should be understood that the proposed system is fully compatible with the previously described method, so the characteristics of the method apply *mutatis mutandis* to the system, which is also an object addressed by the present invention.

Nevertheless, in order to achieve the purposes addressed by the present invention, the mobile device 20 is equipped with at least one memory unit, a comparison unit, and a processing unit.

In this context, the mobile device 20 is configured to initially allow a user to define at least one operating segment, whereby the site is classified by its type of operation.

The mobile device 20 is configured to receive in the memory unit at least one operating segment database, where the database comprises a set of specialized models provided from the general portfolio, such as a base planogram.

As mentioned above, the received database in the mobile device 20 is directly related to the field of operation of such site. In other words, if the site is a sporting goods store, the mobile device 20 will receive at least one database related to sporting goods, without receiving databases related to personal grooming products, for example.

The mobile device 20 is equipped with image capture means, such as a camera, allowing it to capture at least one image and process that image, whereby such processing may include at least one from editing and local storage thereof.

Image editing may include a series of tools, such as adjusting lights, shadows, focus, brightness, sharpness, warmth, cropping, selection, painting, exclusion, etc. It is stressed that the user may choose a region of the photograph by selecting a polygon defined by at least three points, for example, where the perspective of the chosen region is altered to compensate for perspective variations, making the image appear as if it had been captured frontally.

However, if a gap is detected in the captured image, the mobile device 20 will inform the user of the gap and may allow the acquisition of the missing object. In such cases, a connection to the network may be required.

If an object is detected in the captured image, the device 20 assigns a specialized model linked to the captured image and associated with the objects in the image.

In other words, the specialized model is related to a specific object type in the image, for example, and is provided from the database already stored in the local device 20 and related to the operating field of that site.

For example, in a sporting goods store, the specialized model could be for cycling helmets.

With the captured image, the mobile device 20 is configured to process the captured image, locally compare the recognized object with a database, and classify it by type, thus allowing the classification of such object.

In the example mentioned earlier, cycling helmets for road, mountain biking, and urban use may be detected and classified.

For this purpose, the mobile device 20 is configured to compare the detected objects with a database and inform the user of the result of this comparison and recognition.

If the comparison with the database does not match the object type entered there, it allows the user to correct the recognized object type directly on the mobile device 20 and generate a corrected object type.

In the same example, assume that an aerodynamic cycling helmet has been classified as an urban helmet. The user will know that such classification is incorrect and may inform this error occurrence through the mobile device 20, thus generating a corrected object type.

The corrected object type is then sent back to the database through the mobile device 20 to update that database, as well as providing feedback to the system in a closed-loop fashion.

This characteristic may be understood as a feedback loop of the system with this corrected information. In other words, the system receives the information already corrected by the user and updates the database and the general portfolio.

Therefore, in other words, the system stores the set of specialized models, and when connected to the network, it allows the remote set of specialized models to be updated.

In this regard, in one embodiment, the mobile device 20 is configured to synchronize a remote set of specialized models from the set of specialized models. Each specialized model is also associated with a noise class.

The system may also generate, locally, based on a series of calculations, at least one KPI related to the recognized object, store it in the memory unit as the generated KPI, and subsequently display it on a display or screen, for example.

Furthermore, during the image capture, the mobile device is configured to also detect an information area, wherein such information area may correspond to a plurality of relevant data about the object detected in the image, such as price, barcode, QR code, etc.

It is worth noting that the captured image may be formed from an image map 10, where the image map 10 consists of a grouping of a plurality of images 10A, 10B, 10C, 10D, 10E, 10F.

The plurality of images 10A, 10B, 10C, 10D, 10E, 10F is also obtained through the mobile device 20, which is configured to horizontally or vertically add each image of the plurality of images 10A, 10B, 10C, 10D, 10E, 10F to the image map 10 by user action on the device.

In any case, the image map 10 is generated locally on the mobile device 20, which is also converted locally on the mobile device 20. In other words, from the plurality of images, a single image is generated on the mobile device 20, allowing for the subsequent processing of this single image, rather than the multiple captured images.

The system is further configured to automatically assign the specific object type in the image based on machine learning, as described previously, thus indicating the specific object type in the image after capturing it with the mobile device 20. The system may also automatically assign the specific object type based on the information stored in a base planogram.

It should be noted that, according to the present invention, the captured image refers to an image of a point of sale and/or to an image on a printed matter, such as a brochure, poster, banner, billboard, and the like.

Moreover, it is proposed that the system, and consequently the mobile device, be able to generate a graphic indication on the captured image, thereby highlighting the detected objects to the user. This graphic indication may be understood as a thumbnail of the captured image.

It is understood that the graphic indication (thumbnail) may be stored, processed, and transmitted to/from a mobile device.

Finally, at least the following KPIs may be generated through the methodology described in the present invention: identification of products as in or out of stock, face count, share of shelf by area and numbers, gaps, intruders, intruder count, intruder share of the space, full planogram compliance, planned planogram positioning, price gaps indicating differences between applied and suggested prices, and product mix.

It is further understood that a specific model may be created based on products made by a manufacturer as well as products made by its competitors. Consequently, it will be possible to detect and classify whether there are any competitor products improperly placed at the point of sale, after taking the photograph.

It is worth noting that the teachings of the present invention may also be implemented using a neural network that may be "trained" to achieve the advancements and advantages proposed herein. In other words, the present invention is fully compatible and may be implemented through neural networks.

Consequently, one of the advantages addressed by the present invention is that the models are specialized, meaning they may encompass a narrower range of products. As a result, these models provide higher accuracy within their context since there is no need to include unnecessary contexts.

According to the above-mentioned teachings, it is thus understood that the invention may be implemented in a mobile application on an electronic device, such as a mobile telephone.

Furthermore, as described, the invention also relies on the use of servers that communicate with the respective electronic device, such as cloud-based servers.

It is therefore understood that the invention also encompasses a non-transitory computer-readable medium comprising a set of instructions that can run the steps of the above-mentioned method, while also handling the features of the described system.

Having described an example of a preferred embodiment, it must be understood that the scope of the present invention encompasses other possible variations, limited only by the content of the appended claims, including possible equivalents thereof.

## Claims

1. Method for local image processing to identify and classify objects and generate KPIs, wherein the steps of the method are performed through a mobile device (20), the method being **characterized in that** it comprises at least the following steps:
- Definition of at least one operating segment,
- Receiving on the mobile device (20), through a network connection, at least one operating segment database, with the database comprising a set of specialized models provided from the remote set of specialized models;
- Capturing at least one image using the mobile device (20);
- Local processing of the image on the mobile device (20);
- Detecting at least one object pattern in the captured image;
- If at least one object pattern is detected, compare it with the respective specialized model for the detected object, wherein the specialized model comprises at least one recognition pattern;
- Evaluating the object pattern in the image with the respective recognition pattern in the specialized model;
- Based on the evaluation between the object pattern in the image and the respective recognition pattern in the specialized model, classifying the object;
- Informing the user that the object has been classified;
- Generating at least one KPI on the mobile device (20) based on the object classification.

2. Method according to Claim 1, **characterized in that** the specialized model is compared with the set of specialized models, wherein each specialized model in the set of specialized models is related to at least one specific object pattern and stored locally on the mobile device (20).

3. Method according to any one of the preceding Claims, **characterized in that** each specialized model comprises at least one recognition pattern, wherein the recognition pattern is configured to indicate that an object has a defined characteristic, with said characteristic allowing to identify the object.

4. Method according to any one of the preceding Claims, **characterized in that** the recognition pattern is configured as at least one among: shape pattern, image pattern, color pattern, text pattern, and combinations thereof.

5. Method according to any one of the preceding Claims, **characterized in that** the set of specialized models is sent to the mobile device (20) based on at least one criterion, such as a time criterion and a localization criterion.

6. Method according to any one of the preceding Claims, **characterized in that** if a plurality of object patterns is detected in the captured image, wherein each object pattern corresponds to its respective specialized model, a step of separately processing each of the specialized models is performed.

7. Method according to any one of the preceding Claims, **characterized in that** the specialized model comprises at least one recognition pattern, wherein the local image processing step comprises separately processing each recognition pattern in the specialized model.

8. Method according to any one of the preceding Claims, **characterized in that** if the comparison between the object pattern in the image and the respective recognition pattern in the specialized model does not allow for the object to be classified, a step of sending the object pattern in the image to a remote system is performed, and a new specialized model is created, based on the object pattern, wherein the recognition pattern in the new specialized model becomes the object pattern, thereby updating the remote set of specialized models.

9. Method according to any one of the preceding Claims, **characterized in that** the step of informing the user that the object has been classified further comprises a step of receiving an user confirmation, wherein the confirmation may be a positive or negative confirmation, whereby if the user confirmation is a negative confirmation of a step generating an update data and establishing a learning feedback channel is performed, wherein the update data updates the object classification, wherein the update data is a learning data related to the evaluation between the object pattern and the recognition pattern.

10. Method according to any one of the preceding Claims, **characterized in that** the remote set of specialized models is updated based on at least one among the update data and the new specialized model.

11. Method according to any one of the preceding Claims, **characterized in that** the step of capturing an image using a mobile device (20) may further include detecting an information area, wherein the information area may correspond to a plurality of relevant data about the object detected in the image.

12. Method according to any one of the preceding Claims, **characterized in that** the captured image in the image capture step may be formed from an image map (10), wherein the image map (10) consists of a grouping of a plurality of images (10A, 10B, 10C, 10D, 10E, 10F), and the plurality of images (10A, 10B, 10C, 10D, 10E, 10F) is obtained through the mobile device (20, 20'), wherein the grouping of the plurality of images (10A, 10B, 10C, 10D, 10E, 10F) is performed by the user of the mobile device (20, 20') by adding each image from the plurality of images (10A, 10B, 10C, 10D, 10E, 10F) to the image map (10), and the addition to the image map (10) may be performed horizontally or vertically.

13. Method according to any one of the preceding Claims, **characterized in that** it further comprises the steps of:
- Generating the image map (10) locally in the mobile device (20), and
- Converting the image map (10) into a single image, wherein this conversion occurs locally on the mobile device (20, 20').

14. Method according to any one of the preceding Claims, **characterized in that** the step of detecting at least one object pattern further comprises the steps of:
- Generating a graphic indication for each detected object pattern, and
- Recording the coordinates in the captured image of each detected object pattern.

15. System for local image processing for object identification and classification, and generation of KPIs, with the system comprising at least one mobile device (20) and a remote database containing a general portfolio, wherein the mobile device (20) is equipped with at least one memory unit and a comparison unit and may be connected to a network, with the system being **characterized in that** the mobile device (20) is configured to:
- Define at least one operating segment;
- Receive, in the memory unit, at least one operating segment database, wherein the database comprises a set of specialized models and is provided from the remote set of specialized models;
- Capture at least one image;
- Process the captured image locally;
- Detect at least one object pattern in the captured image;
- If at least one object pattern is detected, consider the respective specialized model for the detected object pattern, wherein the specialized model comprises at least one recognition pattern;
- Evaluate the object pattern in the image with the respective recognition pattern in the specialized model;
- Classify the object based on the evaluation between the object pattern in the image and the respective recognition pattern in the specialized model;
- Inform the user that the object has been classified;
- Generate at least one KPI on the mobile device (20) based on the object classification.

16. System according to Claim 15, **characterized in that** the specialized model is considered from the set of specialized models, wherein each specialized model in the set of specialized models is related to at least one specific object pattern and stored locally on the mobile device (20).

17. System according to any of the preceding Claims, **characterized in that** each specialized model comprises at least one recognition pattern, wherein the recognition pattern is configured to indicate that an object possesses a particular characteristic, such characteristic allowing to identify the object.

18. System according to any of the preceding Claims, **characterized in that** the recognition pattern is configured as at least one among: shape pattern, image pattern, color pattern, text pattern, and combinations thereof.

19. System according to any of the preceding Claims, **characterized in that** the set of specialized models is sent to the mobile device (20) based on at least one criterion such as a time and location criterion.

20. System according to any one of the preceding Claims, **characterized in that** if a plurality of object patterns is detected in the captured image, wherein each object pattern has its respective specialized model, the mobile device (20) is configured to process each specialized model separately.

21. System according to any one of the preceding Claims, **characterized in that** the specialized model comprises at least one recognition pattern, and the local image processing includes processing each recognition pattern in the specialized model separately.

22. System according to any one of the preceding Claims, **characterized in that** if the comparison between the object pattern in the image and the respective recognition pattern in the specialized model does not allow for object classification, it is configured to send the object pattern from the image to a remote system and create a new specialized model based on the object pattern, wherein the recognition pattern in the new specialized model will be the object pattern, thus updating the remote set of specialized models.

23. System according to any one of the preceding Claims, **characterized in that** it is configured to receive confirmation from the user after informing the user that the object has been classified, also wherein such confirmation may be positive or negative, whereby in case user confirmation is negative, it generates an update data and establishes a learning feedback channel, wherein the update data updates the object classification, and the update data is a learning data related to the evaluation between the object pattern and the recognition pattern.

24. System according to any one of the preceding Claims, **characterized in that** the remote set of specialized models is updated based on at least one from among the update data and the new specialized model.

25. System according to any one of the preceding Claims, **characterized in that** the mobile device (20) is configured to perform information area detection during image capture, wherein the information area corresponds to a plurality of relevant data about the object detected in the image.

26. System according to any one of the preceding Claims, **characterized in that** the captured image may be composed of an image map (10), wherein the image map (10) consists of a grouping of a plurality of images (10A, 10B, 10C, 10D, 10E, 10F), and the plurality of images (10A, 10B, 10C, 10D, 10E, 10F) is obtained through the mobile device (20, 20'), wherein the grouping of the plurality of images (10A, 10B, 10C, 10D, 10E, 10F) is performed by the user of the mobile device (20, 20') by adding each image from the plurality of images (10A, 10B, 10C, 10D, 10E, 10F) to the image map (10), with such additions to the image map (10) being either horizontal or vertical.

27. System according to any one of the preceding Claims, **characterized in that** the image map (10) is generated on the mobile device (20), and the image map (10) is locally converted into a single image on the said mobile device (20, 20').

28. System according to any one of the preceding Claims, **characterized in that** it is configured to generate a graphic indication for each detected object pattern and record the coordinates of each detected object pattern in the captured image.

29. System according to any one of the preceding Claims, **characterized in that** it is configured to indicate the specific object type in the image before or after capturing an image with the mobile device (20).

30. System according to any one of the preceding Claims, **characterized in that** it is configured whereby each specialized model is further associated with a noise class.

31. System according to any one of the preceding Claims, **characterized in that** the captured image refers to an image of a point of sale and/or refers to an image on printed matter.

32. System according to any one of the preceding Claims, **characterized in that** it is compatible with the method defined in Claim 1.

33. An object displayed on a shelf and in an image captured on a mobile device (20), **characterized in that** it is recognized using the method defined in Claim 1, based on the system defined in Claim 15.

34. A non-transitory computer-readable medium **characterized in that** it comprises a set of instructions configured to run the method defined in Claim 1 based on the system defined in Claim 15.
